# EUROPÄISCHE PATENTANMELDUNG

(11) **EP 4 530 506 A1**
(43) Veröffentlichungstag der Anmeldung: **02.04.2025**
(21) Anmeldenummer: 23200132.1
(22) Anmeldetag: 27.09.2023
(51) Int. Cl.: F16K 1/48, F16K 17/04, F16K 27/02, F16K 37/00, F16K 41/10

(54) **SICHERHEITSVENTIL**

(71) Anmelder: M + S Armaturen GmbH, 26446 Friedeburg (DE)
(72) Erfinder: Bariz, Arthur-Wilhelm, 26639 Wiesmoor (DE)
(74) Vertreter: Jabbusch, Matthias

(57) **Zusammenfassung**

Die Erfindung betrifft ein Sicherheitsventil, insbesondere federbelastetes Sicherheitsventil, insbesondere ein Normal-Sicherheitsventil, mit wenigstens einem Austrittskammergehäuse, das eine Austrittskammer umschließt, und wenigstens einem an das Austrittskammergehäuse angesetzten Federgehäuse. In dem Federgehäuse ist eine Feder aufgenommen, die in der Austrittskammer einen Ventilteller (9) über eine Ventilspindel (4) mit einer bestimmten Vorspannung gegen einen Ventilsitz (10) drückt. Das Sicherheitsventil zeichnet sich dadurch aus, dass die Austrittskammer zu dem Federgehäuse mit der Feder mit einem Gehäuseeinsatz (5) des Austrittskammergehäuses verschlossen ist, wobei die Ventilspindel in dem Gehäuseeinsatz gleitend durch diesen hindurchgeführt ist. Weiter ist zwischen dem Ventilteller und dem Gehäuseeinsatz eine Dichtmanschette (11) ausgebildet, die an einem äußeren Umfang des Ventiltellers an diesen angreift und die in Richtung des Ventilsitzes Druckwirkflächen ausbildet.

## Beschreibung

Die Erfindung betrifft ein Sicherheitsventil, insbesondere federbelastetes Sicherheitsventil, insbesondere ein Normal-Sicherheitsventil, mit wenigstens einem Austrittskammergehäuse, das eine Austrittskammer umschließt, und wenigstens einem an das Austrittskammergehäuse angesetzten Federgehäuse, einer in dem Federgehäuse aufgenommenen Feder, die in der Austrittskammer einen Ventilteller über eine Ventilspindel mit einer bestimmten Vorspannung gegen einen Ventilsitz drückt.

Eine Herausforderung stellt dabei, wie bei allen ein Medium führenden Anlagen, eine angemessene Abdichtung zu medienführenden Bereichen dar. Angemessen bezieht sich dabei einerseits auf eine an die Umgebungsbedingungen, wie zum Beispiel zu erwartende Drücke, angepasste Dichtheit des Sicherheitsventils und andererseits auf eine möglichst kostengünstige Lösung, durch beispielsweise eine dies berücksichtigende Konstruktion des Sicherheitsventils. Bei Anlagen zur Herstellung von Lebensmitteln oder medizinischen Produkten kommen zudem noch erhöhte Anforderungen hinsichtlich deren Reinigbarkeit hinzu.

Bei herkömmlichen Abdichtungen der Ventilspindel mittels eines Wellendichtrings, kann durch Bewegung der Ventilspindel zudem Schmutz aus dem Federgehäuse in die Austrittskammer mitgezogen werden und umgekehrt. Zudem besteht auch die Gefahr eines Verklebens der Spindel am Wellendichtring, was unter anderem durch Medienrückstände in Austrittskammer begünstigt werden könnte.

Weiter wird an entsprechende Sicherheitsventile unter anderem die Anforderung gestellt, dass diese nach Überschreiten des vorgegebenen Ansprechdrucks und einem Entweichen von Medium möglichst zügig wieder geschlossen werden müssen, sobald der jeweilige Ansprechdruck unterschritten wird. Regelmäßig ist hierfür ein Wert einzuhalten, der durch eine Norm, zum Beispiel AD2000 oder DIN EN ISO 4126-1, vorgegeben ist. Für die DIN EN ISO 4126-1 betragen diese Werte beispielhaft bei Luft einen um höchstens 15 % oder 0,3 bar gegen dem jeweiligen Ansprechdruck des Sicherheitsventils geringeren Wert bzw. bei bei Wasser einen um höchstens 20 % oder 0,6 bar gegen dem jeweiligen Ansprechdruck des Sicherheitsventils geringeren Wert.

Bei Sicherheitsventilen aus dem Stand der Technik wird versucht, diese zum Teil widerstrebenden Anforderungen zu vereinen. So zeigt das Sicherheitsventil vom Typ FHCSV02-H DN40 der Firma M&S Armaturen GmbH eine Kombination aus Wellendichtring und O-Ring-Dichtung, um die Ventilspindel, das Federgehäuse mit der Feder und die Austrittskammer zueinander abzudichten und gleichzeitig eine strömungsgünstige Anordnung in der Austrittskammer sicherzustellen. Der mehrteilige Aufbau ist jedoch auch anfällig für Undichtigkeiten, da verschiedene zum Teil oder zueinander bewegliche Teile miteinander kombiniert sind, beschädigt sein können oder auch fehlerhaft zusammengesetzt sein können.

Aufgabe der Erfindung ist es, ein Sicherheitsventil bereitzustellen, das dem Rechnung trägt und möglichst einfach aufgebaut ist.

Die Lösung dieser Aufgabe erfolgt mit den Merkmalen des Anspruchs 1. Weiterbildungen und vorteilhafte Ausgestaltungen sind in den jeweils nachgeordneten Ansprüchen angegeben.

Das Sicherheitsventil, insbesondere federbelastete Sicherheitsventil, mit wenigstens einem Austrittskammergehäuse, das eine Austrittskammer umschließt, und wenigstens einem an das Austrittskammergehäuse angesetzten Federgehäuse, einer in dem Federgehäuse aufgenommenen Feder, die in der Austrittskammer einen Ventilteller über eine Ventilspindel mit einer bestimmten Vorspannung gegen einen Ventilsitz drückt, zeichnet sich erfindungsgemäß dadurch aus, dass die Austrittskammer zu dem Federgehäuse mit der Feder mit einem Gehäuseeinsatz des Austrittskammergehäuses verschlossen ist, wobei die Ventilspindel in dem Gehäuseeinsatz gleitend durch diesen hindurchgeführt ist und dass zwischen dem Ventilteller und dem Gehäuseeinsatz eine Dichtmanschette ausgebildet ist, die an einem äußeren Umfang des Ventiltellers an diesen angreift und die in Richtung des Ventilsitzes Druckwirkflächen ausbildet.

Die Dichtmanschette umschließt damit alle beweglichen Komponenten in der Austrittskammer. Einerseits kommen so mechanisch beanspruchte Teile nicht mit entweichendem Medium in Kontakt und andererseits sind möglichst wenige Bauteile mit dem Inneren der Austrittskammer verbunden, wodurch für Undichtigkeiten oder Verschmutzungen anfällige Verbindungen zwischen den Bauteilen reduziert sind. Durch eine Bewegung der Ventilspindel in die Austrittskammer oder das Federgehäuse gelangenden Verschmutzungen oder Verklebungen durch Medienrückstände ist damit effektiv entgegengewirkt.

Die in Richtung des Ventilsitzes ausgebildeten Druckwirkflächen stellen zudem ein günstiges Strömungsprofil sicher, bei dem aufgrund von bei Überdruck entweichendem Medium, dieses ein zügiges Schließen des Sicherheitsventils begünstigt oder zumindest nicht behindert.

Diese Druckwirkflächen sind in weiterer Ausgestaltung dadurch gebildet, dass die Dichtmanschette an dem Gehäuseeinsatz eine geringere Weite als an dem Ventilteller aufweist. In die Austrittskammer einströmendes Medium drückt dann beidseitig, das heißt an der dem Ventilsitz zugewandten und an der von dem Ventilsitz abgewandten Seite mit den Druckwirkflächen der Dichtmanschette gegen den Ventilteller. Dadurch erfolgt ein zumindest teilweiser Ausgleich des Druckes auf den Ventilteller durch das Medium selbst, so dass der Ventilteller von der Feder schneller und mit geringerer Kraft wieder in seine geschlossene Ausgangsposition gedrückt werden kann, sobald sich der Druck in einem zu überwachenden System wieder reguliert hat.

Gemäß einer Weiterbildung ist zudem vorgesehen, dass die Dichtmanschette mit seinem die geringste Weite aufweisenden Bereich an dem Gehäuseeinsatz befestigt ist. Durch eine solche Ausführung werden unter anderem maximal große Druckwirkflächen und ein geringer Materialeinsatz für die Dichtmanschette sichergestellt.

Besonders vorteilhaft ist dabei eine Ausführung, bei der sich die Dichtmanschette in Richtung des Gehäuseeinsatzes konisch zulaufend verengt. Der Anpressdruck durch austretendes Medium verteilt sich so auf eine möglichst große Fläche der Dichtmanschette.

Eine einfache und vor allem auch mehrfach lösbare Befestigung der Dichtmanschette an dem Gehäuseeinsatz erfolgt bevorzugt dadurch, dass die Dichtmanschette an dem Gehäuseeinsatz verklemmt ist. In weiterer Ausgestaltung kann dies mit einer Klemmnuss erfolgen, mit der die Dichtmanschette gegen den Gehäuseeinsatz gedrückt und in ihrer vorbestimmten Position gehalten wird. Die Klemmnuss wird dann ebenso wie die Ventilspindel vollständig von der Dichtmanschette umhüllt.

Nach einer Weiterbildung ist zudem vorgesehen, dass die Dichtmanschette wenigstens eine Wulst aufweist, die den Gehäuseeinsatz hintergreift. Die dadurch gebildete Hinterschneidung stellt eine formschlüssige Verbindung her, die ein Herausrutschen der eingesetzten Dichtmanschette, insbesondere der korrekt eingesetzten Dichtmanschette, verhindert.

Der Gehäuseeinsatz ist darüber hinaus vorteilhafterweise zwischen dem Austrittskammergehäuse und dem Federgehäuse verklemmt, wobei das Austrittskammergehäuse und das Federgehäuse miteinander verschraubt sind. Um an das Innere des Sicherheitsventils zu gelangen muss somit nur diese eine Verschraubung gelöst werden, durch welche die Feder, die Ventilspindel und der Ventilteller in einer vorbestimmten Position zu dem Austrittskammergehäuse und dem Federgehäuse fixiert sind.

Alternativ kann der Gehäuseeinsatz auch mit dem Austrittskammergehäuse der Austrittskammer verschraubt sein, um die gesamte Feder mit der Dichtmanschette zur Montage oder Demontage aus der Austrittskammer beziehungsweise dem Austrittskammergehäuse herausnehmen zu können. Gleichzeitig wird dadurch auch der Zusammenbau des Sicherheitsventils beziehungsweise das Einsetzen der Feder erleichtert.

Weiter ist die Dichtmanschette nach einer Weiterbildung an dem Ventilteller verklemmt, insbesondere an einem äußeren Rand des Ventiltellers verklemmt. Dadurch ist sichergestellt, dass sich die Dichtmanschette über die gesamte, vom Ventilsitz abgewandte Fläche des Ventiltellers erstreckt und eine möglichst große Anströmfläche ausbildet.

Verklemmt wird die Dichtmanschette in weiterer Ausgestaltung dadurch, dass diese an dem Ventilteller eine Klemmscheibe hintergreift, insbesondere mit einer wulstartigen Verbreiterung eine Klemmscheibe hintergreift. Durch das Vorsehen der wulstartigen Verbreiterung ist dabei einerseits eine optimierte Passform erreicht und andererseits auf einfache Weise ein Hinterschnitt ausgebildet. Insbesondere kann die wulstartige Verbreiterung einen in Richtung Feder vorstehenden Kragen aufweisen, der den Hinterschnitt ausbildet. Durch den Kragen wird die Klemmscheibe dann an ihrem äußeren Umfang um 180° von der Dichtmanschette umfasst.

Um die Dichtmanschette festklemmen zu können, ist weiterhin vorgesehen, dass diese mittels eines Klemmstücks zwischen Klemmscheibe und dem Ventilteller gehalten ist, insbesondere verklemmt ist. Mit dem Klemmstück können die Klemmscheibe und der Ventilteller auf einfache Weise gegeneinandergepresst werden, wodurch eine große Kraft auf die zwischen diesen angeordnete Dichtmanschette aufgebracht werden kann. Hierbei kann entweder das Klemmstück selbst als Schraube ausgebildet sein oder mittels einer Schraube festgeklemmt sein.

Nach einer Weiterbildung weist das Sicherheitsventil zudem eine Leckageüberwachung auf, die in den Gehäuseeinsatz integriert ist. Mit der Leckageüberwachung können dann Undichtigkeiten der Dichtmanschette frühzeitig festgestellt werden. Eine solche Leckageüberwachung kann zum Beispiel wenigstens einen Feuchtigkeitssensor umfassen, der in einem durch die Dichtmanschette zum Inneren der Austrittskammer abgedichteten Bereich angeordnet ist und einen entsprechenden Alarm auslöst. Alternativ kann eine Leckageüberwachung auch durch wenigstens einen Kanal gebildet sein, der durch das Austrittskammergehäuse und den Gehäuseeinsatz von einem durch die Dichtmanschette zu der Austrittskammer abgedichteten Bereich nach außen führt. Undichtigkeiten der Dichtmanschette können dann mittels einer einfachen Sichtprüfung festgestellt werden.

Zudem bildet die Leckageüberwachung eine Be- und Entlüftungsöffnung für den mit der Dichtmanchette gegenüber der Austrittskammer abgedichteten Bereich. Druckpolster, welche die ordnungsgemäße Funktion des Sicherheitsventils beeinträchtigen könnten, insbesondere des als Normal-Sicherheitsventils ausgelegten Sicherheitsventils beeinträchtigen könnten, ist damit entgegen gewirkt.

Ein Ausführungsbeispiel der Erfindung, aus dem sich weitere erfindungswesentliche Merkmale ergeben können, ist in der Zeichnung dargestellt. Gleiche Teile sind dabei in allen Figuren der Zeichnung mit gleichen Bezugszeichen versehen. Es zeigen:
- Fig. 1:: eine perspektivische Darstellung eines erfindungsgemäßen Sicherheitsventils;
- Fig. 2:: eine Detailansicht einer ersten Ausführung des erfindungsgemäßen Sicherheitsventils gemäß Fig. 1 im Querschnitt; und
- Fig. 3:: eine Detailansicht einer zweiten Ausführung des erfindungsgemäßen Sicherheitsventils gemäß Fig. 1 im Querschnitt.

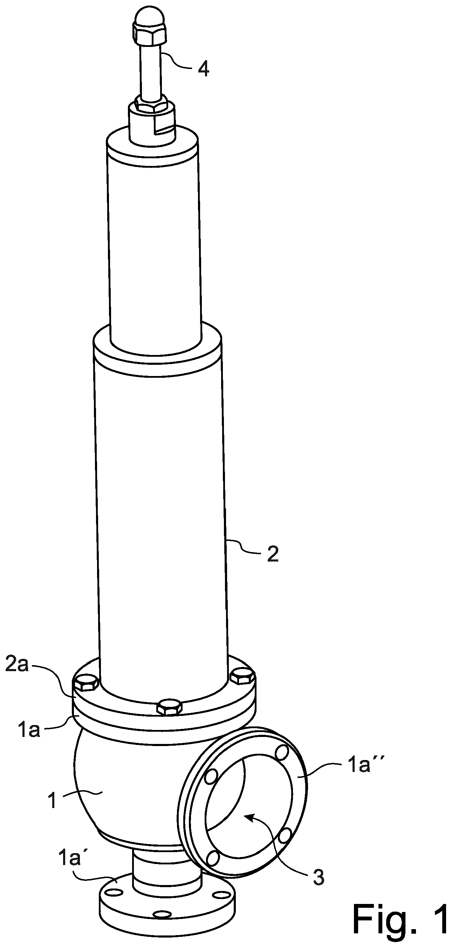

Figur 1 zeigt ein erfindungsgemäßes Sicherheitsventil, welches ein Austrittskammergehäuse 1 und ein zylindrisches Federgehäuse 2 für eine Feder aufweist. Das Federgehäuse 2 und das Austrittskammergehäuse 1 sind jeweils über einen Flansch 1a, 2a miteinander verbunden, wobei die Flansche 1a, 2a miteinander verschraubt sind.

Das Austrittskammergehäuse 1 begrenzt eine Austrittskammer 1b für ein zu überwachendes Medium und weist zwei weitere Flansche 1a', 1a" auf. Der zu dem Flansch 1a gegenüberliegende Flansch 1a' ist zu einem Anschluss des Sicherheitsventils an ein zu überwachendes System vorgesehen und steht bei bestimmungsgemäßer Verwendung in Abhängigkeit von dem jeweiligen System und Medium in Kontakt mit dem jeweiligen Medium beziehungsweise einem Medium führenden Bereich des Systems. Der Flansch 1a" bildet eine Abblaseöffnung 3 für bei einem Überschreiten eines bestimmungsgemäßen Ansprechdrucks in die Austrittskammer 1b eingedrungenen Mediums und ist rechtwinklig zu den beiden anderen Flanschen 1a, 1a' ausgerichtet. An seinem dem Flansch 2a entgegengesetzten Ende ist zudem noch ein aus dem Federgehäuse 2 herausgeführtes Ende einer Ventilspindel 4 ersichtlich.

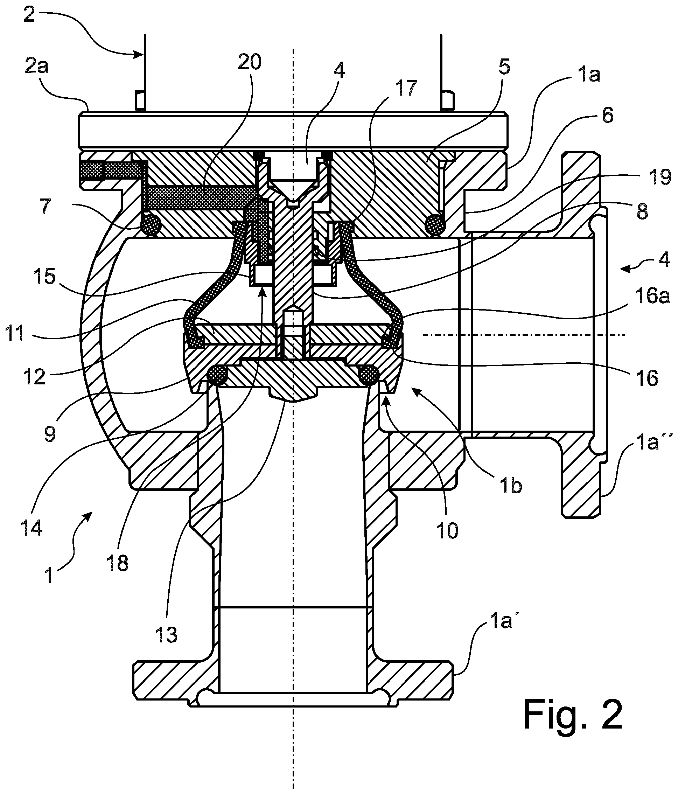

In Figur 2 ist ersichtlich, dass zwischen dem Federgehäuse 2 und der Austrittskammer 1b ist ein Gehäuseeinsatz 5 angeordnet. Der Gehäuseeinsatz 5 bildet ein mediumdichtes Trennelement und ist zwischen einem Stutzen 6 des Flansches 1a und dem Federgehäuse 2 verklemmt, wobei zwischen dem Austrittskammergehäuse 1 und dem Gehäuseeinsatz 5 ein Dichtring 7, insbesondere ein O-Ring, eingesetzt ist.

Die Ventilspindel 5 drückt in Richtung der Austrittskammer 1b gegen einen Schaft 8 eines Ventiltellers 9. Die Ventilspindel 5 greift dabei mit ihrem Ende in eine Vertiefung eines gegenüber dem restlichen Schaft 8 verbreiterten Kopfes des Schafts 8 ein. Der Ventilteller 9 verschließt einen Ventilsitz 10 der dem Flansch 1a' des Austrittskammergehäuses 1 zugeordnet ist und öffnet sich nur bei Überschreiten des bestimmungsgemäßen Ansprechdrucks des Sicherheitsventils.

Zwischen dem Ventilteller 9 und dem Gehäuseeinsatz 5 ist eine Dichtmanschette 11 eingespannt, die alle beweglichen Teile des Sicherheitsventils innerhalb des Austrittskammergehäuses 1 abdichtend gegen die Austrittskammer 1b abschirmt. Diese Dichtmanschette 11 ist an einem äußeren Umfang des Ventiltellers 10 an diesem gehalten und verjüngt sich in Richtung des Gehäuseeinsatzes 5, wobei austrittskammerseitige Flächen der Dichtmanschette 11 Druckwirkflächen für ein in die Austrittskammer 1b eingedrungenes Medium darstellen.

Dem Ventilteller 9 ist dazu eine innenliege Klemmscheibe 12 zugeordnet, das heißt diese Klemmscheibe 12 ist innerhalb eines durch die Dichtmanschette 11 gegenüber der restlichen Austrittskammer 1b abgeschirmten Bereichs angeordnet und liegt mit Vorteil flächig an dem Ventilteller 9 an. Die Dichtmanschette 11 ist dann zwischen der Klemmscheibe 12 und dem Ventilteller 9 verklemmt. Um den Ventilteller 9 und die Klemmscheibe 12 gegeneinander zu pressen, ist diesen noch ein Klemmstück 13 zugeordnet, das zentrisch zu dem Ventilteller 9 und der Klemmscheibe 12 in diese eingreift und gegen einen umlaufenden Versatz des Schaftes 8 drückt. Der Ventilteller 9 ist dementsprechend zwischen dem Klemmstück 13 und der Klemmscheibe 12 angeordnet. Zwischen dem Ventilteller 9 und dem Klemmstück 13 ist zudem noch ein Dichtring 14 zu der Austrittskammer 1b beziehungsweise einem Medium führenden Bereich eines zu überwachenden Systems eingelegt.

An dem Gehäuseeinsatz 5 ist die Dichtmanschette 11 ebenso verklemmt. Hierfür ist innerhalb des mit der Dichtmanschette 11 gegenüber der restlichen Austrittskammer 1b gegen eindringendes Medium abgeschirmten Bereichs der Austrittskammer 1b eine Klemmnuss 15 in den Gehäuseeinsatz 5 eingesetzt, insbesondere eingeschraubt. Die eingesetzte Klemmnuss 15 drückt dabei die Dichtmanschette 11 gegen den Gehäuseeinsatz 5.

Sowohl der Ventilteller 9 als auch die Klemmscheibe 12 weisen eine umlaufende Nut auf, in denen jeweils hälftig eine wulstartige Verbreiterung 16 der Dichtmanschette 11 eingelegt ist. Diese wulstartige Verbreiterung 16 der Dichtmanschette 11 weist einen in Richtung des Gehäuseeinsatzes 5 gerichteten Kragen 16a auf.

Aus Figur 2 ist weiterhin ersichtlich, dass die Dichtmanschette 11 gehäuseeinsatzseitig einen als Wulst 17 ausgebildeten Endbereich aufweist, wobei diese Wulst 17 in eine Nut des Gehäuseeinsatzes 5 eingreift und dadurch in ihrer Position zu dem Gehäuseeinsatz 5 festgelegt ist. Insbesondere ist die Dichtmanschette 11 mit deren geringster Weite an dem Gehäuseeinsatz 5 festgesetzt. Die die Dichtmanschette 11 an dem Gehäuseeinsatz 5 sichernde Klemmnuss 15 weist dabei einen sich konisch verjüngenden Endbereich auf, durch den gewährleistet ist, dass die Wulst 17 der Dichtmanschette 11 beim Einsetzen der Klemmnuss 15 mit zunehmendem Druck in die Nut geschoben wird und mit großer Sicherheit korrekt positioniert wird.

Die Ventilspindel 4 beziehungsweise der die Ventilspindel 4 im Bereich einer Durchführung 18 durch den Gehäuseeinsatz 5 fortsetzende Schaft 8 sind innerhalb der Durchführung 18 mittels einer Gleitbuchse geführt und durch einen O-Ring 19 abgedichtet.

Weiter zeigt Figur 2 noch einen Kanal 20 zur Leckageüberwachung und Entlüftung. Dieser Kanal 20 erstreckt sich von dem mit der Dichtmanschette 11 gegenüber der restlichen Austrittskammer 1b gegen eindringendes Medium abgeschirmten Bereich durch den Gehäuseeinsatz 5 und das Austrittskammergehäuse 1 nach außen.

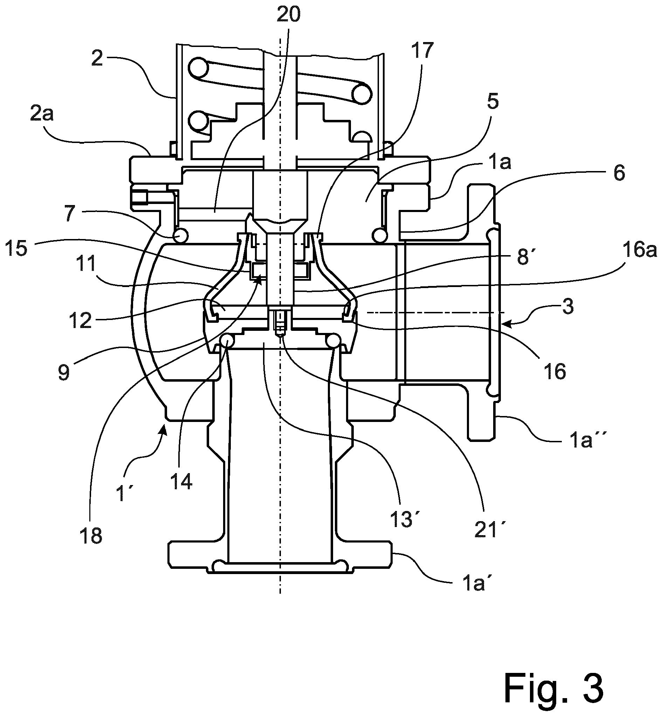

Figur 3 zeigt eine alternative Ausführung, bei der der Ventilteller 9, die Klemmscheibe 12 und das Klemmstück 13' mit einer von dem Federgehäuse 2' aus in Richtung des Ventiltellers 9 durch den Schaft 8' eingesetzten Schraube 21' zusammengehalten werden. Die übrigen Merkmale der Figur 3 stimmen mit denen der Figur 2 überein.

## Patentansprüche

1. Sicherheitsventil, insbesondere federbelastetes Sicherheitsventil, insbesondere ein Normal-Sicherheitsventil, mit wenigstens einem Austrittskammergehäuse (1, 1'), das eine Austrittskammer (1b) umschließt, und wenigstens einem an das Austrittskammergehäuse (1, 1') angesetzten Federgehäuse (2), einer in dem Federgehäuse (2) aufgenommenen Feder, die in der Austrittskammer (1b) einen Ventilteller (9) über eine Ventilspindel (4) mit einer bestimmten Vorspannung gegen einen Ventilsitz (10) drückt, **dadurch gekennzeichnet,**
**dass** die Austrittskammer (1b) zu dem Federgehäuse (2) mit der Feder mit einem Gehäuseeinsatz (5) des Austrittskammergehäuses (1, 1') verschlossen ist, wobei die Ventilspindel (4) in dem Gehäuseeinsatz (5) gleitend durch diesen hindurchgeführt ist, und
**dass** zwischen dem Ventilteller (9) und dem Gehäuseeinsatz (5) eine Dichtmanschette (11) ausgebildet ist, die an einem äußeren Umfang des Ventiltellers (9) an diesen angreift und die in Richtung des Ventilsitzes (10) Druckwirkflächen ausbildet.

2. Sicherheitsventil nach Anspruch 1, **dadurch gekennzeichnet, dass** die Dichtmanschette (11) an dem Gehäuseeinsatz (5) eine geringere Weite als an dem Ventilteller (9) aufweist.

3. Sicherheitsventil nach einem der Ansprüche 1 oder 2, **dadurch gekennzeichnet, dass** die Dichtmanschette (11) sich in Richtung des Gehäuseeinsatzes (5) konisch zulaufend verengt.

4. Sicherheitsventil nach einem der Ansprüche 1 bis 3, **dadurch gekennzeichnet, dass** die Dichtmanschette (11) mit seinem die geringste Weite aufweisenden Bereich an dem Gehäuseeinsatz (5) befestigt ist.

5. Sicherheitsventil nach einem der Ansprüche 1 bis 4, **dadurch gekennzeichnet, dass** die Dichtmanschette (11) an dem Gehäuseeinsatz (5) verklemmt ist.

6. Sicherheitsventil nach einem der Ansprüche 1 bis 5, **dadurch gekennzeichnet, dass** die Dichtmanschette (11) zwischen dem Gehäuseeinsatz (5) und einer Klemmnuss (15) in ihrer vorbestimmten Position gehalten wird.

7. Sicherheitsventil nach einem der Ansprüche 1 bis 6, **dadurch gekennzeichnet, dass** die Dichtmanschette (11) wenigstens eine Wulst (17) aufweist, die den Gehäuseeinsatz (5) hintergreift.

8. Sicherheitsventil nach einem der Ansprüche 1 bis 7, **dadurch gekennzeichnet, dass** die Dichtmanschette (11) an dem Ventilteller (9) verklemmt ist, insbesondere an einem äußeren Rand des Ventiltellers (9) verklemmt ist.

9. Sicherheitsventil nach einem der Ansprüche 1 bis 8, **dadurch gekennzeichnet, dass** die Dichtmanschette (11) an dem Ventilteller (9) eine Klemmscheibe (12) hintergreift, insbesondere mit einer wulstartigen Verbreiterung (16) eine Klemmscheibe (12) hintergreift.

10. Sicherheitsventil nach Anspruch 9, **dadurch gekennzeichnet, dass** die Dichtmanschette (11) mittels eines Klemmstücks (13, 13`) zwischen Klemmscheibe (12) und dem Ventilteller (9) gehalten ist, insbesondere verklemmt ist.

11. Sicherheitsventil nach einem der Ansprüche 1 bis 10, **dadurch gekennzeichnet, dass** in den Gehäuseeinsatz (5) eine Leckageüberwachung integriert ist.

12. Sicherheitsventil nach Anspruch 11, **dadurch gekennzeichnet, dass** die Leckageüberwachung durch wenigstens einen Kanal (20) gebildet ist, der durch das Austrittskammergehäuse (1, 1') und den Gehäuseeinsatz (5) von einem durch die Dichtmanschette (11) zu der Austrittskammer (1b) abgedichteten Bereich nach außen führt.

## Geänderte Patentansprüche

### Geänderte Patentansprüche gemäss Regel 137(2) EPÜ.

**1.** Sicherheitsventil, insbesondere federbelastetes Sicherheitsventil, insbesondere ein Normal-Sicherheitsventil, mit wenigstens einem Austrittskammergehäuse (1, 1'), das eine Austrittskammer (1b) umschließt, und wenigstens einem an das Austrittskammergehäuse (1, 1') angesetzten Federgehäuse (2), einer in dem Federgehäuse (2) aufgenommenen Feder, die in der Austrittskammer (1b) einen Ventilteller (9) über eine Ventilspindel (4) mit einer bestimmten Vorspannung gegen einen Ventilsitz (10) drückt, wobei die Austrittskammer (1b) zu dem Federgehäuse (2) mit der Feder mit einem Gehäuseeinsatz (5) des Austrittskammergehäuses (1, 1') verschlossen ist, wobei die Ventilspindel (4) in dem Gehäuseeinsatz (5) gleitend durch diesen hindurchgeführt ist, wobei zwischen dem Ventilteller (9) und dem Gehäuseeinsatz (5) eine Dichtmanschette (11) ausgebildet ist, die an einem äußeren Umfang des Ventiltellers (9) an diesen angreift und die in Richtung des Ventilsitzes (10) Druckwirkflächen ausbildet und wobei die Dichtmanschette (11) an dem Gehäuseeinsatz (5) eine geringere Weite als an dem Ventilteller (9) aufweist,
**dadurch gekennzeichnet,**
**dass** die Dichtmanschette (11) an dem Ventilteller (9) verklemmt ist.

**2.** Sicherheitsventil nach Anspruch 1, **dadurch gekennzeichnet, dass** die Dichtmanschette (11) sich in Richtung des Gehäuseeinsatzes (5) konisch zulaufend verengt.

**3.** Sicherheitsventil nach einem der Ansprüche 1 oder 2, **dadurch gekennzeichnet, dass** die Dichtmanschette (11) mit seinem die geringste Weite aufweisenden Bereich an dem Gehäuseeinsatz (5) befestigt ist.

**4.** Sicherheitsventil nach einem der Ansprüche 1 bis 3, **dadurch gekennzeichnet, dass** die Dichtmanschette (11) an dem Gehäuseeinsatz (5) verklemmt ist.

**5.** Sicherheitsventil nach einem der Ansprüche 1 bis 4, **dadurch gekennzeichnet, dass** die Dichtmanschette (11) zwischen dem Gehäuseeinsatz (5) und einer Klemmnuss (15) in ihrer vorbestimmten Position gehalten wird.

**6.** Sicherheitsventil nach einem der Ansprüche 1 bis 5, **dadurch gekennzeichnet, dass** die Dichtmanschette (11) wenigstens eine Wulst (17) aufweist, die den Gehäuseeinsatz (5) hintergreift.

**7.** Sicherheitsventil nach einem der Ansprüche 1 bis 6, **dadurch gekennzeichnet, dass** die Dichtmanschette an einem äußeren Rand des Ventiltellers (9) verklemmt ist.

**8.** Sicherheitsventil nach einem der Ansprüche 1 bis 7, **dadurch gekennzeichnet, dass** die Dichtmanschette (11) an dem Ventilteller (9) eine Klemmscheibe (12) hintergreift, insbesondere mit einer wulstartigen Verbreiterung (16) eine Klemmscheibe (12) hintergreift.

**9.** Sicherheitsventil nach Anspruch 8, **dadurch gekennzeichnet, dass** die Dichtmanschette (11) mittels eines Klemmstücks (13, 13') zwischen Klemmscheibe (12) und dem Ventilteller (9) gehalten ist, insbesondere verklemmt ist.

**10.** Sicherheitsventil nach einem der Ansprüche 1 bis 9, **dadurch gekennzeichnet, dass** in den Gehäuseeinsatz (5) eine Leckageüberwachung integriert ist.

**11.** Sicherheitsventil nach Anspruch 10, **dadurch gekennzeichnet, dass** die Leckageüberwachung durch wenigstens einen Kanal (20) gebildet ist, der durch das Austrittskammergehäuse (1, 1') und den Gehäuseeinsatz (5) von einem durch die Dichtmanschette (11) zu der Austrittskammer (1b) abgedichteten Bereich nach außen führt.

**1.** Sicherheitsventil, insbesondere federbelastetes Sicherheitsventil, insbesondere ein Normal-Sicherheitsventil, mit wenigstens einem Austrittskammergehäuse (1, 1'), das eine Austrittskammer (1b) umschließt, und wenigstens einem an das Austrittskammergehäuse (1, 1') angesetzten Federgehäuse (2), einer in dem Federgehäuse (2) aufgenommenen Feder, die in der Austrittskammer (1b) einen Ventilteller (9) über eine Ventilspindel (4) mit einer bestimmten Vorspannung gegen einen Ventilsitz (10) drückt, wobei die Austrittskammer (1b) zu dem Federgehäuse (2) mit der Feder mit einem Gehäuseeinsatz (5) des Austrittskammergehäuses (1, 1') verschlossen ist, wobei die Ventilspindel (4) in dem Gehäuseeinsatz (5) gleitend durch diesen hindurchgeführt ist, wobei zwischen dem Ventilteller (9) und dem Gehäuseeinsatz (5) eine Dichtmanschette (11) ausgebildet ist, die an einem äußeren Umfang des Ventiltellers (9) an diesen angreift und die in Richtung des Ventilsitzes (10) Druckwirkflächen ausbildet und wobei die Dichtmanschette (11) an dem Gehäuseeinsatz (5) eine geringere Weite als an dem Ventilteller (9) aufweist,
**dadurch gekennzeichnet,**
**dass** die Dichtmanschette (11) an einem äußeren Rand des Ventiltellers (9) verklemmt ist.

**2.** Sicherheitsventil nach Anspruch 1, **dadurch gekennzeichnet, dass** die Dichtmanschette (11) sich in Richtung des Gehäuseeinsatzes (5) konisch zulaufend verengt.

**3.** Sicherheitsventil nach einem der Ansprüche 1 oder 2, **dadurch gekennzeichnet, dass** die Dichtmanschette (11) mit seinem die geringste Weite aufweisenden Bereich an dem Gehäuseeinsatz (5) befestigt ist.

**4.** Sicherheitsventil nach einem der Ansprüche 1 bis 3, **dadurch gekennzeichnet, dass** die Dichtmanschette (11) an dem Gehäuseeinsatz (5) verklemmt ist.

**5.** Sicherheitsventil nach einem der Ansprüche 1 bis 4, **dadurch gekennzeichnet, dass** die Dichtmanschette (11) zwischen dem Gehäuseeinsatz (5) und einer Klemmnuss (15) in ihrer vorbestimmten Position gehalten wird.

**6.** Sicherheitsventil nach einem der Ansprüche 1 bis 5, **dadurch gekennzeichnet, dass** die Dichtmanschette (11) wenigstens eine Wulst (17) aufweist, die den Gehäuseeinsatz (5) hintergreift.

**7.** Sicherheitsventil nach einem der Ansprüche 1 bis 6, **dadurch gekennzeichnet, dass** die Dichtmanschette (11) an dem Ventilteller (9) eine Klemmscheibe (12) hintergreift, insbesondere mit einer wulstartigen Verbreiterung (16) eine Klemmscheibe (12) hintergreift.

**8.** Sicherheitsventil nach Anspruch 7, **dadurch gekennzeichnet, dass** die Dichtmanschette (11) mittels eines Klemmstücks (13, 13') zwischen Klemmscheibe (12) und dem Ventilteller (9) gehalten ist, insbesondere verklemmt ist.

**9.** Sicherheitsventil nach einem der Ansprüche 1 bis 8, **dadurch gekennzeichnet, dass** in den Gehäuseeinsatz (5) eine Leckageüberwachung integriert ist.

**10.** Sicherheitsventil nach Anspruch 9, **dadurch gekennzeichnet, dass** die Leckageüberwachung durch wenigstens einen Kanal (20) gebildet ist, der durch das Austrittskammergehäuse (1, 1') und den Gehäuseeinsatz (5) von einem durch die Dichtmanschette (11) zu der Austrittskammer (1b) abgedichteten Bereich nach außen führt.

**1.** Sicherheitsventil, insbesondere federbelastetes Sicherheitsventil, insbesondere ein Normal-Sicherheitsventil, mit wenigstens einem Austrittskammergehäuse (1, 1'), das eine Austrittskammer (1b) umschließt, und wenigstens einem an das Austrittskammergehäuse (1, 1') angesetzten Federgehäuse (2), einer in dem Federgehäuse (2) aufgenommenen Feder, die in der Austrittskammer (1b) einen Ventilteller (9) über eine Ventilspindel (4) mit einer bestimmten Vorspannung gegen einen Ventilsitz (10) drückt, wobei die Austrittskammer (1b) zu dem Federgehäuse (2) mit der Feder mit einem Gehäuseeinsatz (5) des Austrittskammergehäuses (1, 1') verschlossen ist, wobei die Ventilspindel (4) in dem Gehäuseeinsatz (5) gleitend durch diesen hindurchgeführt ist, wobei zwischen dem Ventilteller (9) und dem Gehäuseeinsatz (5) eine Dichtmanschette (11) ausgebildet ist, die an einem äußeren Umfang des Ventiltellers (9) an diesen angreift und die in Richtung des Ventilsitzes (10) Druckwirkflächen ausbildet und wobei die Dichtmanschette (11) an dem Gehäuseeinsatz (5) eine geringere Weite als an dem Ventilteller (9) aufweist,
**dadurch gekennzeichnet,**
**dass** die Dichtmanschette (11) an einem äußeren Rand des Ventiltellers (9) verklemmt ist und
**dass** die Dichtmanschette (11) an dem Ventilteller (9) eine Klemmscheibe (12) hintergreift.

**2.** Sicherheitsventil nach Anspruch 1, **dadurch gekennzeichnet, dass** die Dichtmanschette (11) sich in Richtung des Gehäuseeinsatzes (5) konisch zulaufend verengt.

**3.** Sicherheitsventil nach einem der Ansprüche 1 oder 2, **dadurch gekennzeichnet, dass** die Dichtmanschette (11) mit seinem die geringste Weite aufweisenden Bereich an dem Gehäuseeinsatz (5) befestigt ist.

**4.** Sicherheitsventil nach einem der Ansprüche 1 bis 3, **dadurch gekennzeichnet, dass** die Dichtmanschette (11) an dem Gehäuseeinsatz (5) verklemmt ist.

**5.** Sicherheitsventil nach einem der Ansprüche 1 bis 4, **dadurch gekennzeichnet, dass** die Dichtmanschette (11) zwischen dem Gehäuseeinsatz (5) und einer Klemmnuss (15) in ihrer vorbestimmten Position gehalten wird.

**6.** Sicherheitsventil nach einem der Ansprüche 1 bis 5, **dadurch gekennzeichnet, dass** die Dichtmanschette (11) wenigstens eine Wulst (17) aufweist, die den Gehäuseeinsatz (5) hintergreift.

**7.** Sicherheitsventil nach einem der Ansprüche 1 bis 6, **dadurch gekennzeichnet, dass** die Dichtmanschette (11) an dem Ventilteller (9) die Klemmscheibe (12) mit einer wulstartigen Verbreiterung (16) hintergreift.

**8.** Sicherheitsventil nach Anspruch 7, **dadurch gekennzeichnet, dass** die Dichtmanschette (11) mittels eines Klemmstücks (13, 13') zwischen Klemmscheibe (12) und dem Ventilteller (9) gehalten ist, insbesondere verklemmt ist.

**9.** Sicherheitsventil nach einem der Ansprüche 1 bis 8, **dadurch gekennzeichnet, dass** in den Gehäuseeinsatz (5) eine Leckageüberwachung integriert ist.

**10.** Sicherheitsventil nach Anspruch 9, **dadurch gekennzeichnet, dass** die Leckageüberwachung durch wenigstens einen Kanal (20) gebildet ist, der durch das Austrittskammergehäuse (1, 1') und den Gehäuseeinsatz (5) von einem durch die Dichtmanschette (11) zu der Austrittskammer (1b) abgedichteten Bereich nach außen führt.
